# EUROPEAN PATENT APPLICATION

(11) **EP 4 512 515 A1**
(43) Date of publication of application: **26.02.2025**
(21) Application number: 23192871.4
(22) Date of filing: 23.08.2023
(51) Int. Cl.: B01J 2/16, C05C 9/00, A23K 50/15

(54) **GRANULATION BASED METHOD FOR PRODUCING GRANULES COMPRISING UREA, BIURET, AND N-CONTAINING COMPOUNDS PRODUCED DURING A UREA CONDENSATION PROCESS**

(71) Applicant: Yara International ASA, 0277 Oslo (NO)
(72) Inventor: Pirro, Laura, 4541 HJ Terneuzen (NL); van Belzen, Ruud, 4541 HJ Terneuzen (NL); Tak, Gino, 4541 HJ Terneuzen (NL); de Vries, Pieter, 4541 HJ Terneuzen (NL); Lam, Robert, 1200 - Woluwe Saint Lambert (BE)
(74) Representative: De Clercq & Partners

(57) **Abstract**

The present disclosure relates to a process for producing granules comprising urea, biuret, N-containing compounds produced during a urea condensation process, and optionally a nitrate compound, using a granulator, in particular a fluidized bed granulator.

## Description

### Technical field

The invention relates to a method for producing granules comprising urea, biuret, N-containing compounds produced during a urea condensation process, optionally further comprising a nitrate compound, particularly by a granulation process.

### Background

Urea is a chemical substance with the chemical formula CH₄N₂O. It contains a very high content of nitrogen (N) and is used in a wide range of industries, including fertilizers, and animal feed. Currently, it is known to produce urea granules with a high amount of urea. One method for instance is to produce granules out of a urea solution or melt which is sprayed into a granulation compartment containing a fluidized bed of solid nuclei. The content of the granulation compartment is fluidized by introducing a fluidization gas, usually air, through the bed of nuclei. The nuclei grow by accretion, i.e., solidification and crystallization of the sprayed urea liquid on them, to form granules of a desired average size, which are subsequently extracted from the fluidized bed granulator. Such technique allows the production of solid particles of high quality with a high production rate.

A new feed composition for ruminants, wherein the feed composition comprises urea, biuret, and other compounds has recently been found. Biuret is a byproduct of urea production, and it is usually desired to keep the level of biuret as low as possible in urea-based fertilizer products, usually below 1.2 weight%. However, for feed compositions, a high amount, such as up to 60 weight%, is tolerated, and even sometimes desirable.

There is thus a need in the art for providing an appropriate granulation-based production process to produce granules from a melt comprising substantial amounts of urea and biuret, as well as N-containing compounds produced during the condensation of urea.

### Summary

The present disclosure generally provides a granulation technique, or stated differently, a method for the production of solid granules from a melt. The granules produced by the present technique comprise a substantial amount of urea and biuret, N-containing compounds produced during a urea condensation process, and optionally one or more nitrate compounds.

In a first aspect, the present disclosure provides a method for producing granules comprising urea, biuret, and N-containing compounds produced during a urea condensation process, using a fluidized bed granulator comprising:
- at least one granulation compartment comprising:
   ∘ one or more air inlets for injecting fluidization gas in the granulation compartment;
   ∘ one or more atomization nozzles for spraying a composition comprising urea, biuret, and N-containing compounds produced during a urea condensation process, in the granulation compartment, the one or more atomization nozzles being configured to receive a stream of atomization air and a stream of a melt comprising urea, biuret, and N-containing compounds produced during a urea condensation process;
- an inlet for seed particles; and
- an outlet for granules;
wherein the method comprises the steps of:
a) continuously injecting a fluidization gas with the one or more air inlets, such that the content of the fluidized bed granulator is fluidized;
b) continuously injecting seed particles in the fluidized bed granulator via the inlet for seed particles;
c) continuously directing a melt comprising urea, biuret, and N-containing compounds produced during a urea condensation process, and a stream of atomizing gas to the one or more atomization nozzles, thereby spraying the melt comprising urea, biuret, and N-containing compounds produced during a urea condensation process, in the granulation compartment; and
d) continuously removing granules via the outlet for granules.

In another aspect, the present disclosure provides granules, obtainable or obtained by a method according to the present disclosure, the granules comprising:
- from 35 wt.% to 55 wt.% of urea, from 35 wt.% to 50 wt.% of biuret, and from 5.0 wt.% to 30 wt.% of the N-containing compounds, and, optionally, from 0.5 wt.% to 5.0 wt.% of a nitrate compound selected from the group of calcium nitrate, potassium nitrate, ammonium nitrate, sodium nitrate, magnesium nitrate, and mixtures thereof; or
- from 20 wt.% to 40 wt.% of urea, from 20 wt.% to 40 wt.% of biuret, from 2.0 wt.% to 15 wt.% of the N-containing compounds, and from 21 wt.% to 37 wt.% of a nitrate compound selected from the group of calcium nitrate, potassium nitrate, ammonium nitrate, sodium nitrate, magnesium nitrate, and mixtures thereof; with wt.% based on the total weight of the particle.

In another aspect, the present disclosure provides the use of the granules according to the present disclosure, as a non-protein nitrogen source for ruminants.

In another aspect, the present disclosure provides the use of the granules produced by a method according to the present disclosure, as a non-protein nitrogen source for ruminants.

### Description of the figures

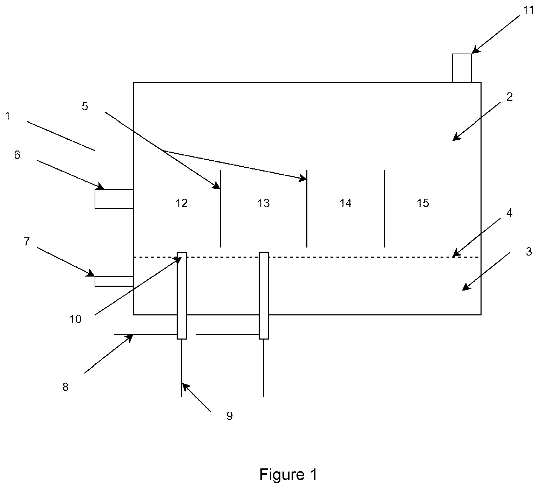

Figure 1 shows a schematic diagram of a fluidized bed granulator which can be used to perform the method according to the present disclosure.

### Detailed description

"A", "an", and "the" as used herein refers to both singular and plural referents unless the context clearly dictates otherwise. By way of example, "a compartment" refers to one or more than one compartment.

The present inventors have developed a process for producing granules, in particular non-sticky granules, of a melt comprising urea, biuret, and N-containing compounds produced during the urea condensation process, or in other words, the production process of biuret out of urea. A urea condensation process is a process comprising heating urea above its melting point. When urea is heated above 132 °C, condensation reactions start to occur, and urea is converted into biuret, and, in addition, so-called "by-products" in the form of N-containing compounds are formed. The main N-containing compounds that are formed during the condensation process of urea are ammelide, cyanuric acid and triuret.

In some embodiments, the N-containing compounds are selected from the group consisting of ammelide, cyanuric acid, triuret, and mixtures thereof. Ammelide is the compound with the chemical formula: C₃H₄N₄O₂, and CAS number: 645-93-2, cyanuric acid is the compound with the chemical formula: C₃H₃N₃O₃, and CAS number: 108-80-5; and triuret is the compound with the chemical formula: C₃H₆N₄O₃, and CAS number: 556-99-0.

A melt comprising substantial amounts of urea and biuret, such as from 5.0 wt.% to 60 wt.% of urea, from 2.0 wt.% and 60 wt.% of biuret, and N-containing compounds produced during the condensation of urea, shows a much different solidification behavior than compositions containing at least 90 wt.% of urea. Such a melt only solidifies slowly and exhibits a rather broad phase transition range instead of a well-defined solidification temperature, making the development of a granulation technology for this kind of melt challenging. Such a melt also displays an important supercooling effect, meaning that the melt can reach a temperature below its solidification temperature while staying in liquid phase.

It is not possible to granulate a urea melt comprising at least 90 wt.% or at least 95 wt.% of urea in a fluidized bed granulator without any additive. Most modern urea production plants use urea formaldehyde as granulation additive, often from 0.3 wt.% to 0.8 wt.% of urea formaldehyde, based on the total weight of the composition.

Surprisingly, it was found that particles could be produced from a melt comprising urea, biuret, and N-containing compounds, in a fluidized bed granulator without the addition of granulation additives to the composition.

**In** a first aspect, the present disclosure provides a method for producing granules comprising urea, biuret, and N-containing compounds produced during a urea condensation process, using a fluidized bed granulator comprising:
- at least one granulation compartment comprising:
   ∘ one or more air inlets for injecting fluidization gas in the granulation compartment;
   ∘ one or more atomization nozzles for spraying a composition comprising urea, biuret, and N-containing compounds produced during a urea condensation process, in the granulation compartment, the one or more atomization nozzles being configured to receive a stream of atomization air and a stream of a melt comprising urea, biuret, and N-containing compounds produced during a urea condensation process;
- an inlet for seed particles; and
- an outlet for granules;
wherein the method comprises the steps of:
a) continuously injecting fluidization gas with the one or more air inlets, such that the content of the fluidized bed granulator is fluidized;
b) continuously injecting seed particles in the fluidized bed granulator via the inlet for seed particles;
c) continuously directing a melt comprising urea, biuret, and N-containing compounds produced during a urea condensation process, and a stream of atomizing gas to the one or more atomization nozzles, thereby spraying the melt comprising urea, biuret, and N-containing compounds produced during a urea condensation process, in the granulation compartment; and
d) continuously removing granules via the outlet for granules.

In the present disclosure, the melt comprises urea, biuret, N-containing compounds which are produced during the urea condensation process to form biuret, and optionally a nitrate compound selected from the group of calcium nitrate, potassium nitrate, ammonium nitrate, sodium nitrate, magnesium nitrate, and mixtures thereof.

The fluidized bed granulator used in the present method is a conventional fluidized bed granulator known in the art. The fluidized bed granulator comprises at least one granulation compartment comprising:
- one or more air inlets arranged to inject fluidization gas in the granulation compartment;
- one or more atomization nozzles for spraying a composition in the granulation compartment, the composition comprising urea, biuret, and N-containing compounds produced during a urea condensation process, and the one or more atomization nozzles being configured to receive a stream of atomization air and a stream of a composition compri sing urea, biuret, and N-containing compounds produced during a urea condensation process;
- an inlet for seed particles; and
- an outlet for granules.

The one or more air inlets are arranged to inject fluidization gas in the granulation compartment, such that the content of the granulator, i.e., the particles and sprayed melt, are maintained in a fluidized state. The flow and temperature of the fluidization gas injected in the granulator may be adjusted depending on the operating conditions of the granulator. The flow and temperature of the fluidization gas influence the temperature of the fluidized bed of granules. For the present method, it was found that a cooler fluidization gas than a typical pure urea granulation method provided granules with better quality, and less dust in the granulator. For example, when granulating a pure urea melt, the fluidization gas has a typical temperature of 70 °C. However, for a melt comprising urea and more than 5.0 wt.% of biuret, it was found that fluidization gas with a temperature of from 5 °C to 70 °C provided better granules. In some embodiments, the fluidization gas injected by the one or more air inlets has a temperature of less than 70 °C, less than 60 °C, less than 50 °C, or even less than 40 °C. In some embodiments, the fluidization gas injected by the one or more air inlets has a temperature of from 5 °C to 70 °C, from 30 °C to 70 °C, from 50 °C to 70 °C, from 5 °C to 60 °C, or from 30 °C to 60 °C. Without being bound by theory, it is though that the cooler temperature is beneficial due to the supercooling effect displayed by such a melt. In some embodiments wherein the melt granulated comprises at least 5.0 wt.% or from 5.0 wt.% to 35 wt.% of a nitrate compound selected from the group of calcium nitrate, potassium nitrate, ammonium nitrate, sodium nitrate, magnesium nitrate, and mixtures thereof, it was found that a temperature of from 30 °C to 55 °C, or from 40 °C to 55 °C produced better results than a granulation process wherein the fluidization gas had a temperature of 60 °C to 70 °C.

In some embodiments, the temperature of the fluidized bed is maintained at a temperature of from 45 °C to 90 °C. It was found that the temperature of the fluidized bed was an important parameter for obtaining good quality granules. The temperature of the fluidized bed cannot be controlled directly, but rather indirectly via a number of parameters, such as the temperature and velocity of the fluidization gas, the temperature of the melt, and the temperature and velocity of the atomization air. It may be difficult to maintain the temperature of the fluidized bed completely constant during production, but it is preferred that the temperature of the fluidized bed does not fluctuate more than 10 °C, or not more than 5 °C, from its target value,

In some embodiments wherein the melt injected in step a) comprises less than 5 wt.% of a nitrate compound, the temperature of the fluidized bed is maintained at a temperature of from 60 °C to 90 °C, or from 70 °C to 85 °C.

In some embodiments wherein the melt injected in step a) comprises more than 5 wt.% of a nitrate compound, or from 5 wt.% to 40 wt.% of a nitrate compound, the temperature of the fluidized bed is maintained at a temperature of from 45 °C to 70 °C, or from 50 °C to 65 °C.

The one or more atomization nozzles for spraying a composition comprising urea, biuret, and N-containing compounds produced during a urea condensation process, in the granulation compartment, are configured to receive a stream of atomization air and a stream of a composition comprising urea, biuret, and N-containing compounds produced during a urea condensation process. Atomization nozzles are devices that are configured to receive a stream of a liquid or slurry, and a stream of gas, called atomization gas. Atomization nozzles are designed such that the streams of liquid or slurry and atomization gas are combined to transform the liquid or slurry into small droplets. The droplets are sprayed in the granulation compartment and, upon contact with granules or seed particles present in the compartment, the droplets solidify on the surface of the granules or seeds, thereby increasing the size and weight of the granules or seed particles.

The fluidized bed granulator also comprises an inlet for seed particles, and an outlet for granules. Seed particles need to be continuously injected in the granulation compartment to produce new granules, and granules that have reached a desired size are removed from the granulator.

In some embodiments, the fluidized bed granulator comprises 2, 3 or 4 granulation compartments, each granulation compartment comprising one or more air inlets arranged to inject fluidization gas in the granulation compartment and comprising one or more atomization nozzles for spraying a composition comprising urea, biuret, and N-containing compounds produced during a urea condensation process, in the granulation compartment, the one or more atomization nozzles being configured to receive a stream of atomization air and a stream of a composition comprising urea, biuret, and N-containing compounds produced during a urea condensation process.

In some embodiments, the fluidized bed granulator comprises cooling compartments. Cooling compartments are compartments separated by walls from other compartments that do not comprise at least one atomization nozzle. Cooling compartments comprise at least one air inlet for injecting fluidization gas.

In some embodiments, the fluidized bed granulator comprises one or more granulation compartments followed by one or more cooling compartments (following the direction of the particles in operation).

In some embodiments, the outlet of the fluidized bed granulator is connected to a cooling device for further cooling the granules produced by the granulator. The cooling device may be a fluidized bed cooler, a bulk flow cooler, or any other type of cooler that is capable of cooling solid granules.

The fluidized bed granulator also comprises an air outlet for removing air from the granulator. The air outlet may be fluidly connected to an air processing system. The air extracted from the granulator may comprise pollutants, such as urea dust and ammonia, such that it may not be possible to release the air directly into the atmosphere. An air processing system is configured to remove the pollutants from the air extracted from the granulator before releasing the air in the atmosphere. An air processing system may comprise a scrubber.

The fluidized bed granulator may also comprise an additional air inlet for allowing ambient air to enter the granulator. This additional air inlet may be connected to a fan.

The method for producing granules comprising urea, biuret, and N-containing compounds, comprises the steps of:
- continuously injecting fluidization gas with the one or more air inlets, such that the content of the fluidized bed granulator is fluidized;
- continuously injecting seed particles in the fluidized bed granulator via the inlet for seed particles;
- continuously directing a melt comprising urea, biuret, and N-containing compounds produced during a urea condensation process, and a stream of atomizing air to the one or more atomization nozzles, thereby spraying the melt comprising urea, biuret, and N-containing compounds produced during a urea condensation process, in the granulation compartment; and
- continuously removing granules via the outlet for granules.

The method according to the present disclosure is directed to the continuous production phase using a fluidized bed granulator. The start-up and shutdown phases of the production method may differ from the method disclosed here.

The production method according to the present disclosure requires four continuous inputs:
1. fluidization gas to maintain the content of the granulator in a fluidized state,
2. seed particles that are capable of interacting with molten droplets to form larger granules,
3. a melt comprising urea, biuret, and N-containing compounds produced during a urea condensation process, to create granules, and
4. atomization gas to transform the melt into small droplets suitable for interacting with the granules and seed particles present in the granulator.

In some embodiments, the fluidization gas is nitrogen, air, or a mixture of air and nitrogen. The role of the fluidization gas is to maintain the content of the granulator in fluidized state. It does not interact chemically with the granules and droplets of melt. The advantage of using air as fluidization gas is its very low cost. Air may be heated using standard means known in the art before being injected inside the granulator.

In some embodiments, the atomization gas is nitrogen, air, or a mixture of air and nitrogen. The role of the atomization gas is to be combined with the melt and create droplets of the melt. It does not interact chemically with the granules and/or the melt. The advantage of using air as atomization gas is its very low cost. Air may be heated using standard means known in the art before being directed to the one or more atomization nozzles.

The injection of seed particles is required to provide nuclei for granules to grow from. In some embodiments, the seed particles have substantially the same chemical composition as the melt being sprayed into the granulator. In some embodiments, the seed particles are undersized granules and crushed oversized granules removed from the granulator in step d) of the present method.

In some embodiments, the granules produced in the granulation compartments are cooled down. The cooling step may facilitate the handling of the granules by reducing their stickiness. The cooling step may be performed inside the granulator using fluidized bed cooling compartments or outside the granulator by directing the granules to a cooling device, such as a fluidized bed cooler, or a bulk flow cooler.

The granulation method produces granules with a wide range of particle sizes. In some embodiments, the method further comprises the step of screening the particles removed from the fluidized bed granulator, thereby creating three streams of granules:
1. a stream of undersized granules, i.e., granules with a size below the desired size;
2. a stream of on-size granules, and
3. a stream of oversized granules.
The stream of undersized granules may be directly sent back to the granulation compartment to act as seed particles. The undersized granules may be further cooled down before being sent back to the granulator. The oversized granules may be crushed, for example in a crusher, to a size below the desired size and sent back to the granulator to also act as seed particles. The oversized granules may be further cooled down before being sent back to the granulator, either before being crushed or after being crushed.

The atomization nozzles are continuously fed with a melt comprising urea, biuret, and N-containing compounds produced during a urea condensation process, and a stream of atomizing air. The atomization nozzles combine both streams to generate droplets of the melt comprising urea, biuret, and N-containing compounds produced during a urea condensation process, in the granulation compartment. The droplets then interact in the granulator with granules and seed particles and increase their sizes.

In some embodiments, the temperature of the melt sprayed by the one or more atomization nozzles is from 110 °C to 150 °C, or from 115 °C and 140 °C. The temperature of the melt may be adapted depending on the composition of the melt and its solidification temperature. It is preferred to use a temperature which reduces the risk of crystallization or solidification of compounds present in the melt to avoid clogging of the atomization nozzles.

In some embodiments, the temperature of the atomization air directed to the one or more atomization nozzles is from 110 °C to 140 °C. This temperature range was found to be preferred in cases wherein the melt comprised less than 5.0 wt.% of a nitrate compound.

In some embodiments, the temperature of the atomization air directed to the one or more atomization nozzles is from 40 °C to 70 °C. This temperature range was found to be preferred in cases wherein the melt comprised more than 5.0 wt.% of a nitrate compound. It was observed that compositions comprising urea, biuret, N-containing compounds from the condensation process of urea, and at least 5.0 wt.% of a nitrate compound, exhibited a solidification, or phase transition, profile such that a lower temperature of the atomization air was tolerated and even beneficial to the granulation process.

Finally, granules are continuously removed from the granulator via the outlet for granules. To avoid a build-up of material inside the granulator, the amount of granules removed from it is equal to the sum of the injection rate of melt via the atomization nozzles and the injection rate of seed particles.

In some embodiments, the present method is performed in the absence of any additional additives to the melt. It is thought that the biuret and the N-containing compounds produced in a urea condensation process provide the necessary properties to the composition to obtain solid particles without requiring the addition of other solidification additives.

The chemical composition of the dry content of the particles removed from the granulator are substantially the same as the chemical composition of the dry content of the melt injected inside the granulator. Said otherwise, no chemical reaction occurs in the granulator, and the ratio of the different components (urea, biuret, N-containing compounds) is identical in the melt and in the final granules. In some embodiments, the composition comprises from 5.0 wt.% to 60 wt.% of urea, from 2.0 wt.% to 60 wt.% of biuret, from 5.0 wt.% to 30 wt.% of N-containing compounds produced during a urea condensation process, and optionally from 0.1 wt.% to 50 wt.% of a nitrate compound selected from the group of calcium nitrate, potassium nitrate, ammonium nitrate, sodium nitrate, magnesium nitrate, and mixtures thereof, with wt.% based on the total weight of the composition. In some embodiments, the particles produced by the method comprise from 20 wt.% to 55 wt.% urea, from 20 wt.% to 50 wt.% urea, from 6.0 wt.% to 20 wt.% of the N-containing compounds, and, optionally, from 0.5 wt.% to 40 wt.% of a nitrate compound selected from the group of calcium nitrate, potassium nitrate, ammonium nitrate, sodium nitrate, magnesium nitrate, and mixtures thereof, with wt.% based on the total weight of the composition, the total weight of the composition forming 100 wt.%. The nitrate compound selected from the group of calcium nitrate, potassium nitrate, ammonium nitrate, sodium nitrate, magnesium nitrate, and mixtures thereof, contributes to the nutritional value of the composition and may facilitate and promote the granulation of the composition.

In some embodiments, the N-containing compounds produced during a urea condensation process and comprised in the melt injected inside the granulator comprise from 2.5 wt.% to 15 wt.%, from 3.0 wt.% to 10 wt.%, from 3.0 wt.% to 8.0 wt.%, or from 5.0 wt.% to 8.0 wt.% of cyanuric acid. In some embodiments, the N-containing compounds produced during a urea condensation process and comprised in the melt injected inside the granulator comprise from 2.5 wt.% to 8.0 wt.%, or from 3.0 wt.% to 6.0 wt.% of triuret. In some embodiments, the N-containing compounds produced during a urea condensation process and comprised in the melt injected inside the granulator comprise from 0.1 wt.% to 5.0 wt.%, or from 0.5 wt.% to 3.0 wt.% of ammelide. In some embodiments, the N-containing compounds produced during a urea condensation process and comprised in the melt injected inside the granulator comprise:
(i) between 2.5 wt.% and 15 wt.%, more in particular between 3.0 wt.% and 10 wt.%, even more in particular between 3.0 wt.% and 8.0 wt.% or between 5.0 wt.% and 8 wt.% of cyanuric acid;
(ii) between 2.5 wt.% and 8.0 wt.%, more in particular between 3 wt.% and 6 wt.% of triuret; and
(iii) between 0.1 wt.% and 5.0 wt.%, more in particular between 0.5 wt.% and 3.0 wt.% of ammelide.

In some embodiments, the melt injected inside the granulator may further comprise from 0.1 wt.% to 10 wt.%, or from 0.1 wt.% to 5.0 wt.% of water. Melts injected in fluidized bed granulators have a typical water content below 5 wt.%. However, it was found that it may be an advantage to granulate compositions comprising urea, biuret, N-containing compounds, and optionally a nitrate compound, with a higher water content, for example up to 10 wt.%. The water present in the melt is evaporated in the granulator and thus removes heat from the granulator due to the enthalpy of vaporization of water, and therefore helps with the granulation process.

When no nitrate compound(s) is (are) present in the granules produced by the present method or the concentration of the nitrate compound selected from the group of calcium nitrate, potassium nitrate, ammonium nitrate, sodium nitrate, and magnesium nitrate, is from 0 wt.% to 5.0 wt.%, the granules, hereafter referred to and abbreviated with "UB", may comprise from 30 wt.% to 60 wt.% of urea, and from 30 wt.% to 60 wt.% of biuret, or from 35 wt.% to 55 wt.% of urea and from 35 wt.% and 50 wt.% of biuret, based on the total weight of the composition, the total weight% of the composition being 100 wt.%. UB compositions may further comprise from 5.0 wt.% to 30 wt.%, from 5.0 wt.% and 20 wt.% or from 6.0 wt.% to 16 wt.%, of the N-containing compounds produced during a urea condensation process. In some embodiments, the UB composition comprises, as N-containing compound, from 2.5 wt.% to 15 wt.%, from 3.0 wt.% and 10 wt.%, or from 5.0 wt.% to 8.0 wt.% of cyanuric acid. In some embodiments, the UB composition comprises, as N-containing compound, from 0.1 wt.% to 5.0 wt.%, from 0.5 wt.% to 3.0 wt.%, or from 0.8 wt.% to 2.0 wt.% of ammelide. In some embodiments, the UB composition comprises, as N-containing compound, from 2.5 wt.% to 8.0 wt.%, or from 3.0 wt.% and 6.0 wt.% of triuret. In some embodiments, the UB composition comprises, as N-containing compounds,
(i) from 2.5 wt.% to 15 wt.%, from 3.0 wt.% and 10 wt.%, or from 5.0 wt.% to 8.0 wt.% of cyanuric acid;
(ii) from 0.1 wt.% to 5.0 wt.%, from 0.5 wt.% to 3.0 wt.%, or from 0.8 wt.% to 2.0 wt.% of ammelide; and/or
(iii) from 2.5 wt.% to 8.0 wt.%, or from 3.0 wt.% and 6.0 wt.% of triuret.
In some embodiments, the UB composition may comprise from 0.1 wt.% to 5.0 wt.%, or from 1.0 wt.% and 4.5 wt.% of a nitrate compound selected from the group of calcium nitrate, potassium nitrate, ammonium nitrate, sodium nitrate, magnesium nitrate, and mixtures thereof.

In some embodiments, the granules may comprise at least 5.0 wt.% of a nitrate compound selected from the group of calcium nitrate, potassium nitrate, ammonium nitrate, sodium nitrate, magnesium nitrate, and mixtures thereof. Such granules, hereafter referred to as "UBN granules", may comprise from 20 wt.% to 40 wt.% of urea, from 20 wt.% to 40 wt.% of biuret, from 4.0 wt.% to 15 wt.% of the N-containing compounds, and from 20 wt.% to 40 wt.% of a nitrate compound selected from the group of calcium nitrate, potassium nitrate, ammonium nitrate, sodium nitrate, magnesium nitrate, and mixtures thereof. In some embodiments, the UBN granules may comprise from 25 wt.% to 35 wt.% of urea, from 25 wt.% to 35 wt.% of biuret, from 4.0 wt.% to 15 wt.% of the N-containing compounds, and from 25 wt.% to 35 wt.% of a nitrate compound selected from the group of calcium nitrate, potassium nitrate, ammonium nitrate, sodium nitrate, magnesium nitrate, and mixtures thereof, even more in particular between 29 wt.% and 33 wt.% of urea, between 29 wt.% and 33 wt.% of biuret, and between 23.5 wt.% and 31.5 wt.% of a nitrate compound selected from the group of calcium nitrate, potassium nitrate, ammonium nitrate, sodium nitrate, magnesium nitrate, and mixtures thereof, based on the total weight of the granules.

In some embodiments, the UBN granules comprises from 20 wt.% to 32 wt.%, from 22 wt.% to 30 wt.%, from 25 wt.% to 32 wt.%, or from 25 wt.% to 30 wt.% of calcium nitrate. In some embodiments, the UBN granules comprises ammonium nitrate. In some embodiments, the UBN granules comprises from 1.0 wt.% and 5.0 wt.%, or from 1.5 wt.% and 2.5 wt.% of ammonium nitrate. Some calcium nitrate compositions may comprise a small amount of ammonium nitrate due to the production process, such as in the nitro-phosphate process, also called Odda process.

In some embodiments, the UBN composition comprises from 6.0 wt.% to 16 wt.% of N-containing compounds produced during a urea condensation process. In some embodiments, the UBN composition comprises, as N-containing compounds,
(i) from 1.0 wt.% to 5.0 wt.%, or from 1.5 wt.% to 3.0 wt.% of triuret,
(ii) from 0.5 wt.% to 3.0 wt.%, or from 0.9 wt.% to 1.5 wt.% of ammelide; and/or
(iii) from 3.0 wt.% to 15 wt.%, or from 3.0 wt.% and 7.0 wt.% of cyanuric acid.

The melt directed to the atomization nozzles must be at least partially liquid, so that the atomization nozzles are able to create droplets. However, the melt may comprise solid particles, not soluble in the melt. The size of the solid particles comprised in the melt must not exceed a certain value to avoid plugging the nozzles. Atomization nozzles may tolerate different particle sizes and content.

In the context of the present disclosure, a "melt" of a compound or composition, such as a "melt of the composition comprising urea, biuret, and the N-containing compounds" refers to a composition in liquid form, i.e., above its melting temperature, containing at least 90 wt.% of the compound or composition and less than 10.0 wt.% water, from 0.1 wt.% to4.5 wt.%, or from 0.1 wt.% to 2.0 wt.% water. A melt (liquid feed) can be dosed to the atomization nozzle via a pressurized vessel or via a suitable pumping means. The temperature of the melt (T_{feed}) can be maintained via a controlled heating system as known to the skilled person, for instance comprising a heating bath and a mantle, heating coils, or any other known alternatives.

In some embodiments, wherein the melt injected in the granulator comprises at least 0.1 wt.% of a nitrate compound selected from the group of calcium nitrate, potassium nitrate, ammonium nitrate, sodium nitrate, magnesium nitrate, and mixtures thereof, the nitrate compound may be added to the melt comprising urea, biuret, and N-containing compounds in a mixing device.

The granules removed from the granulator may have a semi-solid (or almost solid) or completely solid form. The granules may have a solid outer core, but a part of the inside of the granules may still be in a liquid form. This is not an issue as the particles are further cooled down before being stored or bagged.

The diameter of the granules may be from 1.0 mm to 4.5 mm, from 1.2 mm to 3.0 mm, from 1.5 mm to 2.5 mm, or from 1.8 mm and 2.2 mm.

In some embodiments, the method further comprises, prior to step a), the step of producing a composition comprising urea, biuret, and N-containing compounds produced during a urea condensation process, in particular in the form of a melt, wherein a urea melt is subjected to a heating process thereby converting the urea melt to the composition comprising urea, biuret, and N-containing compounds produced during a urea condensation process. Advantageously, the thus produced melt can be fed directly to the fluidized bed granulator and can be directly subjected to a granulation process according to the present disclosure, without any intermediate steps. The temperature and duration of the heating process may influence the chemical content of the composition produced by the heating process.

In some embodiments, the method comprises the step of directing a urea melt by suitable means, such as a pump, to a single reactor vessel or a series of different reactor vessels where the heating process and condensation of urea takes place. The urea melt directed to the one or more reactor vessels may comprise from 95 wt.% to 100 wt.% urea. The urea melt may be formed by melting solid urea particles, such as urea prills. Alternatively, the urea melt may be produced in a urea-producing plant by reacting ammonia and carbon dioxide in a reactor, thereby producing an aqueous solution comprising urea, which may be further processed to obtain a urea melt. This urea melt is then heated in the one or more reactor vessels using a heating device to a desired process temperature of between 140 °C and 180°C. At this temperature, condensation reactions of urea occur and create biuret and other N-containing compound, such as ammelide, cyanuric acid and triuret. In some embodiments, the melt in the one or more reactor vessels is heated to a temperature of from 140 °C to 160 °C, or of 145 °C. Each of the reactor vessels has a top part with a headspace and a bottom part. Water present in the melt is evaporated and transported in the headspace of the reactor vessel.

During the heating process and the formation of the melt comprising urea, biuret, and N-containing compounds, gaseous by-products are produced as well. For example, it is known that ammonia (NH₃) is liberated at temperatures above the melting point of urea, which is around 133 °C. Carbon dioxide and water vapor may also be formed during the condensation process. In order to increase the conversion of urea into biuret and other N-containing compounds, it is preferred to remove these gases from the melt and the reactor vessel. A first possibility to do so is to introduce a carrier gas in the melt present in the one or more reactor vessels which strips the gaseous by-products out of the melt. The carrier gas is thus mixed with the gaseous by-products resulting in a gas combination. A second possibility is to introduce a purging gas stream in the headspace of the one or more reactor vessels which mixes with the gaseous by-products, resulting in a gas combination. It is also possible to perform both options, either simultaneously or alternatingly. Introducing a carrier gas in the melt present in the one or more reactor vessels may be done using a sparger which is designed to bubble the carrier gas up into the melt from the bottom part of the respective reactor vessel(s). The carrier gas can be nitrogen gas, carbon dioxide, air, or mixtures thereof. Introducing a purging gas stream in the headspace of the one or more reactor vessels is more in particular done by applying a purging air stream. The resulting gas combinations as described above are then evacuated out of the respective reactor vessel via the top part thereof.

In some embodiments, those one or more reactor vessels are furthermore provided with a circulation loop which is arranged externally to the respective reactor vessel(s), and which is arranged to let the melt circulate through it, wherein the melt flows from the reactor vessel to the circulation loop via an inlet opening of the circulation loop and flows back to the reactor via an outlet opening of the circulation loop. This allows mixing of the melt present in the one or more reactor vessels and aids in the mass transfer. The circulation loop is optionally heated to avoid plugging of the loop which could happen when the melt crystallizes in the loop. The circulation of the melt furthermore promotes the separation of the gaseous by-products via flashing. In some embodiments, the outlet opening of the circulation loop, i.e., where the circulation loop is connected to the reactor vessel and where the melt flows out of the circulation loop into the respective reactor vessel, is arranged as a narrowed orifice to ensure pressure build-up and thereafter expansion of the flow of the melt, providing in amongst others a better separation of gaseous by-products and melt.

A second aspect of the present disclosure provides granules obtained or obtainable by a method according to the present disclosure.

In some embodiments, the chemical composition of the dry content of the melt directed to the atomization nozzles and the composition of the dry matter of the obtained granules are substantially the same. Typically, only the water content can be decreased due to some evaporation inside the granulator.

In another aspect, the present disclosure provides granules, in particular granules obtainable or obtained by a process according to the present disclosure, comprising:
- from 35 wt.% to 55 wt.% of urea, from 35 wt.% to 50 wt.% of biuret, and from 5.0 wt.% to 30 wt.% of the N-containing compounds, and, optionally, from 0.5 wt.% to 5.0 wt.% of a nitrate compound selected from the group of calcium nitrate, potassium nitrate, ammonium nitrate, sodium nitrate, magnesium nitrate, and mixtures thereof; or
- from 20 wt.% to 40 wt.% of urea, from 20 wt.% to 40 wt.% of biuret, from 2.0 wt.% to 15 wt.% of the N-containing compounds, and from 21 wt.% to 37 wt.% of a nitrate compound selected from the group of calcium nitrate, potassium nitrate, ammonium nitrate, sodium nitrate, magnesium nitrate, and mixtures thereof;
with wt.% based on the total weight of the particle.

The present disclosure has focused on the granulation of a melt comprising urea, biuret, and N-containing compounds produced during a urea condensation process, using a fluidized bed granulator. However, it is envisaged that granules may be obtained with the same melt using other granulation techniques, such as pan granulation, and drum granulation.

Pan and drum granulation are similar to fluidized bed granulation in that a melt is sprayed on granules or seed particles in constant movement. The melt interacts with the granules and seed particles, leading to the growth of granules and seed particles.

It is also envisaged that other particulation technique, such as spray cooling, spray drying, spheroidization, pelletization, spray congealing, melt spinning, and melt crushing, could be used to prepare solid granules from a melt comprising urea, biuret, N-containing compounds and optionally a nitrate compound.

The granules comprising urea, biuret, and N-containing compounds produced during a condensation process of urea, optionally comprising a nitrate compound selected from the group of calcium nitrate, potassium nitrate, ammonium nitrate, sodium nitrate, magnesium nitrate, and mixtures thereof, according to the present disclosure as described above, can typically be used as a feed supplement for ruminants as a Non-Protein Nitrogen (NPN) source in their feed. Accordingly, another aspect of the present disclosure provides for the use of the granulated particles according to the present disclosure as a non-protein nitrogen source for ruminants.

Figure 1 is a schematic drawing of a fluidized bed granulator 1 that may be used to perform the method according to the present disclosure. The granulator **1** is divided into two zones **2** and **3** separated by a perforated plate **4.** The upper zone **2** is divided into several compartments **12, 13, 14,** and **15,** by walls **5.** In operation, the fluidized bed of particles is located above the perforated plate **4.** The upper zone **2** of the granulator **1** comprises an inlet for seed particles **6** and a gas outlet **11.** The lower zone **3** comprises an inlet for a fluidization gas **7.** The perforated plate **4** comprises openings (not shown on the figure) to allow the fluidization gas to be injecting in the upper zone **2.** The granulator **1** also comprises at least one atomization nozzle **10,** which is connected to a gas line **8** for receiving a stream of atomization gas, and a melt line **9** for receiving a melt comprising urea, biuret, and N-containing compounds. The granulator compartments **12** and **13** that comprise at least one atomization nozzle are called granulation compartments, and granulator compartments **14** and **15** that do not comprise at least one atomization nozzle are called cooling compartments.

### Example 1:

Table 1 discloses the composition (each value is in wt.% based on the total weight of the melt) of three melts that were granulated in a fluidized bed granulator:

**Table 1**

| | Urea | Biuret | N-containing compounds | Calcium nitrate | Water |
|---|---|---|---|---|---|
| Melt 1 | 95.0 | 1.0 | 0 | 0 | 4.0 |
| Melt 2 - UB | 41 | 42.4 | 12.8 | 0 | 3.8 |
| Melt 3 - UBN | 29.5 | 30.4 | 7.5 | 28.6 | 4.0 |

Melt 1 comprises 95 wt.% of urea and is used as reference material. The granulation tests were done in batch mode: seed particles of the same composition as the melt were placed in the granulator, and granulation started until the desired particle size was obtained, without any recycling of the undersized and oversized particles. The parameters used in the granulation test are detailed in Table 2 below:

**Table 2**

| | Melt 1 | Melt 2 | Melt 3 |
|---|---|---|---|
| melt temperature, °C | 130 | 131 | 135 |
| injection air temperature, °C | 130 | 130 | 60 |
| fluidization air temperature, °C | 70 | 65 | 50 |
| bed temperature, °C | 110 | 77 | 55 |
| injected melt flow rate, kg/h | 400 | 120 | 107 |
| injection air /melt flow ratio | 0.6 | 1.2 | 1.5 |

The UB and UBN particles were analyzed, and the results are given in Table 3 below.

**Table 3**

| | | Urea | UB | UBN |
|---|---|---|---|---|
| <1,6 | % | 0 | 0,06 | 0,02 |
| 1,6-2,0 | % | 0.2 | 0,05 | 0,02 |
| 2,0-2,5 | % | 3 | 0,19 | 1,1 |
| 2,5-3,15 | % | 28.4 | 3,12 | 23,41 |
| 3,15-3,55 | % | 28.4 | 7,89 | 37,85 |
| 3,55-4,0 | % | 20.7 | 29,06 | 30,88 |
| 4,0-4,5 | % | 13.5 | 51,19 | 6,35 |
| 4,5-5,0 | % | 4.6 | 8,4 | 0,37 |
| avg diam | mm | 3.4 | 4,03 | 3,42 |
| sphericity | % | 95 | 95,1 | 90,2 |
| Density | g/l | 780 | 840 | 757 |
| Crushing strength | kg | 3.5 | 7 | 2,7 |
| Abrasion dust | mg/kg | 300 | 100 | 2500 |
| Impact resistance | % | 1,0 | 0,2 | 0,1 |

## Claims

1. A method for producing granules comprising urea, biuret, and N-containing compounds produced during a urea condensation process, using a fluidized bed granulator comprising:
- at least one granulation compartment comprising:
∘ one or more air inlets for injecting fluidization gas in the granulation compartment;
∘ one or more atomization nozzles for spraying a composition in the granulation compartment, the composition comprising urea, biuret, and N-containing compounds produced during a urea condensation process, and the one or more atomization nozzles being configured to receive a stream of atomization air and a stream of a melt comprising urea, biuret, and N-containing compounds produced during a urea condensation process;
- an inlet for seed particles; and
- an outlet for granules;
wherein the method comprises the steps of:
a) continuously injecting fluidization gas with the one or more air inlets, thereby creating a fluidized bed;
b) continuously injecting seed particles in the fluidized bed granulator via the inlet for seed particles;
c) continuously directing a melt comprising urea, biuret, and N-containing compounds produced during a urea condensation process, and a stream of atomizing gas to the one or more atomization nozzles, thereby spraying the melt comprising urea, biuret, and N-containing compounds produced during a urea condensation process, in the granulation compartment; and
d) continuously removing granules via the outlet for granules.

2. The method according to claim 1, wherein the temperature of the fluidized bed is maintained at a temperature of from 45 °C to 90 °C.

3. The method according to claim 1 or 2, wherein the granules removed from the granulator in step d) comprise from 5.0 wt.% to 60 wt.% of urea, from 2.0 wt.% to 60 wt.% of biuret, and from 5.0 wt.% to 30 wt.% of the N-containing compounds, based on the total weight of the composition.

4. The method according to claim 1, wherein the melt directed to the one or more atomization nozzles further comprises a nitrate compound selected from the group of calcium nitrate, potassium nitrate, ammonium nitrate, sodium nitrate, magnesium nitrate, and mixtures thereof.

5. The method according to claim 4, wherein the granules removed from the granulator in step d) comprise from 20 wt.% to 40 wt.% of urea, from 20 wt.% to 40 wt.% of biuret, from 0.1 to 37 wt.% of a nitrate compound selected from the group of calcium nitrate, potassium nitrate, ammonium nitrate, sodium nitrate, magnesium nitrate, and mixtures thereof, in particular wherein the granules removed from the granulator in step d) comprise from 25 wt.% to 35 wt.% of urea, from 25 wt.% to 35 wt.% of biuret, from 20 wt.% and 35 wt.% of a nitrate compound selected from the group of calcium nitrate, potassium nitrate, ammonium nitrate, sodium nitrate, magnesium nitrate, and mixtures thereof.

6. The method according to any one of claims 1 to 5, wherein the temperature of the fluidization gas injected by the one or more air inlets is from 30 °C to 70 °C, from 50 °C to 70 °C, or from 30 °C to 60 °C.

7. The method according to any one of claims 1 to 6, wherein the fluidized bed granulator comprises 2, 3 or 4 granulation compartments, each granulation compartment comprising one or more air inlets arranged to inject fluidization gas in the granulation compartment and one or more atomization nozzles for spraying a composition comprising urea, biuret, and N-containing compounds produced during a urea condensation process, in the granulation compartment, the one or more atomization nozzles being configured to receive a stream of atomization air and a stream of a composition comprising urea, biuret, and N-containing compounds produced during a urea condensation process.

8. The method according to any one of claims 1 to 7, wherein the temperature of the melt sprayed by the one or more atomization nozzles is from 110 °C to 150 °C, or from 115 °C and 140 °C.

9. The method according to any one of claims 1 to 8, wherein the temperature of the atomization air directed to the one or more atomization nozzles is from 40 °C to 140 °C, from 110 °C to 140 °C, or from 40 °C to 70 °C.

10. The method according to any one of claims 1 to 9, wherein the melt directed to the one or more atomization nozzles has a temperature of from 110 °C to 150 °C.

11. The method according to any one of claims 1 to 10, wherein the granules removed from the fluidized bed granulator have a diameter of between 1.0 mm and 4.5 mm, in particular between 1.2 mm and 3.0 mm, more in particular between 1.5 mm and 2.5 mm, and even more in particular between 1.8 mm and 2.2 mm.

12. The method according to any one of claims 1 to 11, wherein, prior to step (a), a melt of the composition comprising urea, biuret, and N-containing compounds produced during a urea condensation process is produced by subjecting a urea melt comprising at least 90 wt.% of urea in one or more reactor vessels, each having a headspace at a top part thereof and a bottom part, to a heating process, such that the temperature of the urea melt reaches from 150 °C to 180 °C, wherein during the heating process the urea melt is converted to the melt of the composition comprising urea, biuret, and N-containing compounds, which is removed from the one or more reactor vessels via the bottom part thereof.

13. Granulated particles, obtainable or obtained by a method according to any one of claims 1 to 12, comprising:
- from 35 wt.% to 55 wt.% of urea, from 35 wt.% to 50 wt.% of biuret, and from 5.0 wt.% to 30 wt.% of the N-containing compounds, and, optionally, from 0.5 wt.% to 5.0 wt.% of a nitrate compound selected from the group of calcium nitrate, potassium nitrate, ammonium nitrate, sodium nitrate, magnesium nitrate, and mixtures thereof; or
- from 20 wt.% to 40 wt.% of urea, from 20 wt.% to 40 wt.% of biuret, from 2.0 wt.% to 15 wt.% of the N-containing compounds, and from 21 wt.% to 37 wt.% of a nitrate compound selected from the group of calcium nitrate, potassium nitrate, ammonium nitrate, sodium nitrate, magnesium nitrate, and mixtures thereof;
with wt.% based on the total weight of the particle.

14. Use of the granulated particles according to claim 13, or the granules produced by the method according to any one of claims 1 to 12, as a non-protein nitrogen source for ruminants.

15. A method for producing granules comprising urea, biuret, and N-containing compounds produced during a urea condensation process, from a melt comprising urea, biuret, and N-containing compounds produced during a urea condensation process, the method comprising the step of granulating the melt comprising urea, biuret, and N-containing compounds produced during a urea condensation process, in a pan granulator, or a drum granulator.
